# EUROPÄISCHE PATENTSCHRIFT

(11) **EP 2 697 752 B1**
(45) Veröffentlichungstag und Bekanntmachung des Hinweises auf die Patenterteilung: **14.07.2021**
(21) Anmeldenummer: 12718907.4
(22) Anmeldetag: 10.04.2012
(51) Int. Cl.: G06Q 10/08, G06Q 30/02

(54) **VERFAHREN ZUM ERSTELLEN VON INDIVIDUELLEN REGALBILDERN FÜR VERSCHIEDENE VERKAUFSSTELLEN**
METHOD FOR PRODUCING INDIVIDUAL SHELF IMAGES FOR DIFFERENT SALES OUTLETS
PROCÉDÉ DE CRÉATION D'IMAGES D'ÉTAGÈRES INDIVIDUELLES POUR DIFFÉRENTS POINTS DE VENTE

(30) Priorität: 09.04.2011 EP 11002995
(43) Veröffentlichungstag der Anmeldung: 19.02.2014
(60) Teilanmeldung: 21151425.2
(73) Patentinhaber: Hoffrogge GmbH, 27793 Wildeshausen (DE)
(72) Erfinder: AMELMANN, Maik, 27793 Wildeshausen (DE); OLTMANN, Stefan, 27793 Wildeshausen (DE); HOFFROGGE, Wilhelm, 27793 Wildeshausen (DE)
(74) Vertreter: Hauck Patentanwaltspartnerschaft mbB
(86) Internationale Anmeldenummer: PCT/EP2012/001550
(87) Internationale Veröffentlichungsnummer: WO 2012/139747

(56) Entgegenhaltungen:
- DE-A1-102005 021 432
- US-A1- 2003 171 979
- US-A1- 2005 203 790
- US-A1- 2007 288 296

## Beschreibung

Die Erfindung betrifft ein Verfahren zum Betreiben mindestens einer Datenverarbeitungsanlage gemäß mindestens einem Programm zum Erstellen von individuellen Regalbildern für eine Vielzahl verschiedener Verkaufsstellen eines Handelsunternehmens.

Die Regale in Verkaufsstellen von Handelsunternehmen werden mittels Regalbildern (auch "Planogramme" genannt) bestückt. Ein Regalbild ist eine Darstellung eines mit verschiedenen Artikeln bestückten Regals. Das Regalbild gibt die Anzahl Regalböden und ggfs. Segmente des Regals wieder. Ferner sind die Proportionen des Regals realistisch abgebildet. Die Artikel sind so dargestellt, dass sie vom Betrachter identifizierbar sind. Meist sind Regalbilder photorealistische Graphiken. Sie dienen dem Personal in den Verkaufsstellen als Vorlage für die Bestückung der Regale. Die verschiedenen Artikel werden entsprechend dieser Vorlage in das Regal eingestellt. Dies gilt sowohl für die vollständige Bestückung des Regals als auch für das Nachfüllen nach teilweiser Entleerung. Beim Erstellen eines Regalbildes wird das anzubietende Sortiment auf das jeweilige Regal unter Berücksichtigung seiner speziellen Abmessungen, Anzahl Regalböden, Regalhöhen und Segmente und der unterschiedlichen Nachfrage nach verschiedenen Artikeln sowie der unterschiedlichen Attraktivität der Standplätze im Regal verteilt.

Bei einem bekannten Computerprogramm für das Erstellen von Regalbildern wird für ein konkretes Regal mittlerer Größe vom Anwender durch Einzelfestlegung der Position und Anzahl jedes Artikels ein Mutterplanogramm erzeugt. Dieses Mutterplanogramm dient als Vorlage für die Erzeugung von weiteren Regalbildern für weitere Regale mit abweichenden Abmessungen in derselben oder anderen Verkaufsstellen. Von dem Mutterplanogramm werden Derivate erzeugt, die an die Ver-Verhältnisse der jeweiligen Regale angepasst sind. Hierfür wird offenbar die Anzahl der Artikel gleicher Art, die in der vordersten Front des Regals stehen, entsprechend den Größenverhältnissen des Regals, für das das Mutterplanogramm erstellt wurde und des Regals, für das das Derivat erzeugt wird, umgerechnet.

Die Erstellung des Mutterplanogramms und der Derivate ist aufwendig. Die Derivate müssen regelmäßig manuell korrigiert werden, weil die Umrechnung nicht zu passgenauen Ergebnissen führt. Außerdem ist nachteilig, dass die Ableitung von Derivaten von einem Mutterplanogramm standortspezifischen Besonderheiten nicht gerecht wird. Viele Artikel werden nämlich je nach Standort der Verkaufsstellen in sehr verschiedenem Maße nachgefragt. Die Abhängigkeit der Nachfrage ist wiederum stark von der Produktkategorie abhängig. Bei Waschmitteln ist beispielsweise die Abhängigkeit der Nachfrage vom Standort der Verkaufsstelle nur gering. Bei Getränken, insbesondere bei Bier, ist jedoch die Abhängigkeit des Absatzes bestimmter Artikel vom jeweiligen Standort stark ausgeprägt. Dem wird durch aufwendige Nachbearbeitung der Derivate von Hand Rechnung getragen. Sowohl das Erstellen eines Mutterplanogramms als auch das Erstellen der Derivate nimmt erhebliche Zeit in Anspruch, die jeweils im Bereich eines ganzen Arbeitstages angesiedelt sein kann.

US2005/0203790 A1 beschreibt ein automatisiertes Verfahren zur Bereitstellung von Regalbildern durch die Verwendung von regelbasierten Befehlen. Für einen Verkaufstandort spezifische Planogramme werden dabei mit Hilfe von den Verkaufstandort betreffenden Geschäftsregeln erstellt. Die Geschäftsregeln werden mit Hilfe einer Künstlichen Intelligenz in mathematische Gleichungen übersetzt, die zur optimalen Platzierung der Produkte in einem Regal verwendet werden.

DE 10 2005 021 432 A1 beschreibt ein Verfahren Speichern und Organisieren von Artikelanordnungsinformationen (z.B. Planogramme bzw. Regalbilder). Das Verfahren umfasst das Bereitstellen elektronischer Dateien, die Anordnungsinformationen für mehrere Artikel einer Verkaufstelle enthalten. Die elektronischen Dateien werden gespeichert und es wird eine Sammlungsdatei erzeugt die Identifikationsinformationen der elektronischen Dateien beinhaltet. In einer Variante des Verfahrens wird die tatsächliche Anzahl von Einheiten der Artikel bestimmt und mit einer Mindestanzahl von Einheiten der Artikel verglichen. Des Weiteren ist ein Ladenzuordnungssystem bekannt, mit dem eine Menge von Planogrammen zusammengestellt und organisiert werden kann. Das System bietet dem Benutzer an, eine Kombination aus verfügbaren Planogrammen auszuwählen, um mehre Abschnitte eines Ladens zu definieren.

Die US 2007/0288296 A1 beschreibt ein computerimplementiertes Verfahren zum Herstellen eines Regalbildes für das Platzieren von Artikeln in Regalen. Eine anfängliche Anordnung von Produkten wird in einer zweidimensionalen Gitterstruktur entsprechend dem physikalischen Verkaufsblock bereitgestellt. Die Gitterstruktur wird hinsichtlich der physikalischen Merkmale der Produkte normalisiert. Eine Mehrzahl logischer Inventarblöcke wird innerhalb des Verkaufsblocks vorgesehen. Eine priorisierte Liste von Produkten wird aus der normalisierten Gitterstruktur hergestellt. Die priorisierte Liste mit Produkten hat zumindest zwei Prioritätsniveaus für jeden Inventarblock. Die Produkte der Prioritätenliste werden in den Inventarblöcken platziert. Die endgültige Anordnung von Produkten innerhalb der Inventarblöcke wird bewertet, um eine optimale Platzierung von Produkten zu ermitteln. Das Regalbild wird ausgefertigt und für jede Kombination von Produkten aus der Prioritätenliste bewertet. Die optimale Platzierung von Produkten beinhaltet die Auswahl einer optimalen Bewertung der Produktplatzierung.

Diese Methode hat den Nachteil, dass der Anwender zu Beginn ein vollständiges Regalbild bereitstellen muss. Die Entwicklung eines Regalbildes für eine bestimmte Verkaufsstelle ist aufwendig. Die Aufteilung der Artikel aus dem Regalbild auf Blöcke erfolgt gemäß Prioritätenliste. Artikel, die sich hinsichtlich sämtlicher Eigenschaften voneinander unterscheiden, können in denselben Blöcken platziert werden.

Davon ausgehend liegt der Erfindung die Aufgabe zugrunde, ein Verfahren zum Erstellen von individuellen Regalbildern für verschiedene Verkaufsstellen zur Verfügung zu stellen, das schneller ausführbar ist und die Berücksichtigung unterschiedliche Nachfrage nach Artikeln an verschiedenen Verkaufsstellen erleichtert.

Die Aufgabe wird durch ein Verfahren mit den Merkmalen von Anspruch 1 gelöst. Vorteilhafte Ausgestaltungen des Verfahrens sind in Unteransprüchen angegeben.

Das erfindungsgemäße Verfahren zum Betreiben einer Datenverarbeitungsanlage gemäß einem Programm zum Erstellen von individuellen Regalbildern für eine Vielzahl verschiedener Verkaufsstellen eines Handelsunternehmens umfasst folgende Schritte:
- Das Programm greift auf Sortimentsdaten zu, die für jede Verkaufsstelle ein individuelles Sortiment aus verschiedenen Artikeln mit zugehörigen Attributen definieren,
- das Programm bietet einem Anwender an, interaktiv über Ein- und Ausgabegeräte verschiedene Blöcke zu definieren, die jeweils
- Artikel mit einem Attribut umfassen, das für den jeweiligen Block spezifisch ist,das Programm greift nach erfolgter Definition von Blöcken durch den Anwender auf die Blöcke in einem Datenspeicher zu,
- das Programm greift auf Regaldaten mit den individuellen Daten mindestens eines Regals jeder Verkaufsstelle in einem Datenspeicher zu,
- das Programm bietet dem Anwender an, interaktiv über Ein- und Ausgabegeräte eine hierarchische bzw. sequentielle Reihenfolge von Platzierungsregeln zu erstellen, die die Platzierung verschiedener Blöcke in Regalen betreffen und vorgeben, nach welchen Regeln die verschiedenen Blöcke in den Regalen zu platzieren sind,
- das Programm greift nach erfolgter Eingabe der Reihenfolge von Platzierungsregeln auf die Reihenfolge von Platzierungsregeln in einem Datenspeicher zu und
- das Programm wendet für jede Verkaufsstelle nacheinander die gespeicherten Platzierungsregeln entsprechend ihrer Reihenfolge auf die gespeicherten Blöcke mit den Artikeln aus dem Sortiment der Verkaufsstelle an und ermittelt unter Berücksichtigung der Regaldaten die Stellplätze der verschiedenen Artikel in dem Regal der Verkaufsstelle und
- das Programm stellt die ermittelten Stellplätze der Artikel in einem Regalbild dar.

Bei dem erfindungsgemäßen Verfahren greift das Programm auf Sortimentsdaten der zu optimierenden Warengruppe (d.h. die Gesamtheit von aus Verbrauchersicht substituierbaren Produktalternativen für die Befriedigung eines Bedürfnisses - z.B. Kategorie "Waschmittel" Verbraucherbedürfnis "Wäsche waschen") zurück. Diese Sortimentsdaten umfassen sämtliche Artikel, die in den verschiedenen Verkaufsstellen eines Handelsunternehmens verkauft werden. Ferner umfassen die Sortimentsdaten für jeden Artikel die jeweils zugehörigen Attribute. Hierbei handelt es sich beispielsweise um eines oder mehrere der nachfolgenden Attribute: Art, Hersteller, Marke, Menge, geographische Herkunft, Farbe, Größe, Verpackungstyp und andere Eigenschaften des Artikels. Die Sortimentsdaten bestimmen für jede Verkaufsstelle, für die das Verfahren Regalbilder erstellt, das individuelle Sortiment. Die Sortimentsdaten werden beispielsweise aus für ein größeres Absatzgebiet ermittelten Marktforschungsdaten zu den Artikeln des Sortiments eines Handelsunternehmens und aus den individuellen Absatzdaten der verschiedenen Verkaufsstellen des Handelsunternehmens gewonnen. Die Marktforschungsdaten werden mit den individuellen Absatzdaten der Verkaufsstellen verknüpft, um das individuelle Sortiment der Verkaufsstellen zu ermitteln. Damit das Programm auf die Sortimentsdaten zugreifen kann, können die Sortimentsdaten in einem Datenspeicher gespeichert werden, auf den das Programm Zugriff hat.

Ferner bietet das Programm einem Anwender an, interaktiv Blöcke zu definieren, die jeweils einen oder mehrere Artikel mit mindestens einem für den Block spezifischen Attribut umfassen. Das Definieren eines Blocks kann in einer komplett neuen Zusammenstellung von Artikeln zu einem Block oder in der Zuordnung von mindestens einem weiteren Artikel zu einem bereits vorher definierten Block bestehen. Die Blöcke umfassen jeweils Artikel mit einem Attribut, das für den jeweiligen Block spezifisch ist. Artikel aus anderen Blöcken weisen dieses Attribut nicht auf. Das Definieren der Blöcke wird durch die Attribute unterstützt bzw. vereinfacht und ist somit regelbasiert. Dies ermöglicht es beispielsweise dem Anwender, spezifische Blöcke zu bilden, deren Besonderheit darin besteht, dass sie Artikel derselben Art, desselben Herstellers, derselben Marke, derselben Menge, derselben geographischen Herkunft, derselben Farbe, derselben Größe, desselben Verpackungstyps oder Artikel mit anderen gleichen Eigenschaften sind. Ein Block kann auch durch mehrere gleiche Eigenschaften von darin enthalten Artikeln spezifiziert sein. Die vom Anwender definierten Blöcke mit Artikeln mit mindestens einem spezifischen Attribut können in einem Datenspeicher gespeichert werden, auf den das Programm Zugriff hat.

Zudem greift das Programm auf Regaldaten mit den individuellen Daten der Regale der verschiedenen Verkaufsstellen zu. Diese individuellen Daten umfassen beispielsweise die Abmessungen der Regale, die Anzahl der Regalböden, die Länge, die Tiefe und die Höhe der Regalböden und die Anzahl Segmente des Regals. Das Programm kann auf Regaldaten einer oder mehrerer Regale derselben Verkaufsstelle zugreifen. Die Regaldaten können in den Verkaufsstellen ermittelt bzw. vom Handelsunternehmen zur Verfügung gestellt werden. Sie können in einem Datenspeicher gespeichert werden, auf den das Programm Zugriff hat. Diese Daten können vom Anwender erfasst oder vom Hersteller bereitgestellt werden. Sie werden gemäß einer Ausgestaltung vom Anwender über ein Eingabegerät in die Datenverarbeitungsanlage eingegeben. Gemäß einer anderen Ausgestaltung greift die Datenverarbeitungsanlage über eine Schnittstelle auf bestehende Daten zurück, die z.B. vom Anwender oder vom Hersteller des Regals zur Verfügung gestellt werden.

Ferner verwendet das Programm Platzierungsregeln, die in einer sequentiellen Reihenfolge geordnet sind. Die Platzierungsregeln geben dem Programm vor, nach welchen Regeln (z.B. wo bzw. in welcher Abfolge) die verschiedenen Blöcke in den Regalen zu platzieren sind. Die Platzierungsregeln können sich auf die Platzierung der Artikel in den Blöcken erstrecken. Die Erstellung der sequentiellen Reihenfolge von Platzierungsregeln wird vom Anwender interaktiv vorgenommen. Diese Tätigkeit kann auf die Festlegung der Reihenfolge vorgegebener Platzierungsregeln beschränkt sein. Ferner kann diese Tätigkeit die Vervielfältigung bzw. Änderung vorgegebener Platzierungsregeln umfassen. Sie kann die Definition von Platzierungsregeln durch den Anwender umfassen.

Eine oder mehrere Platzierungsregeln sind beispielsweise ausgewählt aus Regeln, die die Platzierung der Blöcke in einem Regal mit standardisierten Abmessungen betreffen, anstatt in einem Regal mit individuellen Regaldaten. Ferner können sie die Platzierung von bestimmten Blöcken auf einem bestimmten Regalboden, auf einer bestimmten Position eines Regalbodens und in einem bestimmten Regalsegment vorgeben. Des Weiteren können die Platzierungsregeln eine Platzierung von Blöcken oder Artikeln in einer bestimmten Richtung in einer vorgegebenen Reihenfolge vorgeben. Die Reihenfolge kann eine alphabetische Reihenfolge sein, die sich insbesondere auf den Namen des Herstellers oder die Marke des Artikels beziehen kann. Ferner können die Platzierungsregeln die Platzierung in einer durch mindestens eine Abmessung und/oder das Gewicht und/oder die Menge und/oder den Preis bestimmten Reihenfolge vorgeben. Des Weiteren können Platzierungsregeln die Platzierung der Artikel in einer für bestimmte Arten von Artikeln vorgegebenen Reihenfolge oder in einer für Gruppen verschiedener Artikel vorgegebenen Reihenfolge festlegen. Des Weiteren können Platzierungsregeln die Einhaltung von bestimmten Freiräumen und/oder von Platzhaltern an bestimmten Positionen des Regals betreffen. Weitere Platzierungsregeln können Regeln, Plätze des Regals aufzufüllen sein, die nach Anwendung der übrigen Platzierungsregeln leer bleiben. Ferner können Platzierungsregeln die Platzierung eines neu in das Sortiment des Handelsunternehmens eingeführten Artikels, auf einer bestimmten Position des Regals vorgeben.

Die Platzierungsregeln können in einem Datenspeicher gespeichert werden, auf den das Programm Zugriff hat.

Nach Ordnung von Artikeln des Sortiments in Blöcke und nach Erstellung der Reihenfolge von Platzierungsregeln für sämtliche Verkaufsstellen erzeugt das Programm individuelle Regalbilder. Hierfür arbeitet das Programm für jede Verkaufsstelle nacheinander die Platzierungsregeln entsprechend ihrer Reihenfolge ab. Hierbei wird jede Platzierungsregel aus der hierarchischen Reihenfolge von Platzierungsregeln auf die Blöcke angewendet. Unter Berücksichtigung der Regaldaten werden die Stellplätze der verschiedenen Blöcke und damit der darin enthaltenen Artikel für das Regal der jeweiligen Verkaufsstelle ermittelt und in einem Regalbild dargestellt. Ggfs. werden die Regalbilder für mehrere Regale derselben Verkaufsstelle ermittelt, wobei die individuellen Regaldaten des jeweiligen Regals zugrundegelegt werden. Das Verfahren ordnet dem Regal jeder Verkaufsstelle ein individuelles Regalbild zu, weil in den Blöcken nur die Artikel berücksichtigt werden, die zum Sortiment der Verkaufsstelle gehören. Zudem werden bei der Erstellung der Regalbilder die individuellen Daten des jeweiligen Regals der betreffenden Verkaufsstelle zugrunde gelegt. Die Regalbilder können für die Bestückung von Regalen - vorzugsweise farbig - ausgedrückt und/oder auf einem Display eines tragbaren Anzeigegeräts angezeigt werden.

Mit "interaktiv" ist in dieser Anmeldung eine Arbeitsweise bezeichnet, bei der der Anwender mit der Datenverarbeitungsanlage im Dialog kommuniziert. Bei diesem Dialogbetrieb der Datenverarbeitungsanlage ist es dem Anwender möglich, über Ein- und Ausgabegeräte im Wechsel von Frage und Antwort direkt mit der Datenverarbeitungsanlage Informationen und Daten auszutauschen. So erhält der Anwender insbesondere die Möglichkeit, im Dialogbetrieb Blöcke zu definieren und eine sequentielle Reihenfolge von Platzierungsregeln zu erstellen.

Das erfindungsgemäße Verfahren ermöglicht somit erstmals das Erstellen individueller Regalbilder für eine Vielzahl verschiedener Verkaufsstellen (d.h. verschiedener Einzelhandelsgeschäfte) in hoher Geschwindigkeit. Das Verfahren eignet sich insbesondere für das Erstellen von Regalbildern für die Regale von Einzelhandelsorganisationen, insbesondere von Lebensmittelketten, Drogeriemarktunternehmen, Mineralölgeschäften, die allesamt Handelsunternehmen im Sinne dieser Patentanmeldung sind.

Das erfindungsgemäße Verfahren wird gemäß einer Ausgestaltung mittels einer einzigen Datenverarbeitungsanlage durchgeführt. Gemäß einer anderen Ausgestaltung wird das Verfahren mittels eines mehrere Datenverarbeitungsanlagen umfassenden Netzwerks durchgeführt. Gemäß einer weiteren Ausgestaltung wird das Verfahren mittels eines einzigen Programmes ausgeführt. Gemäß einer weiteren Ausgestaltung werden verschiedene Teile des Verfahrens mittels verschiedener Programme ausgeführt. Beispielsweise werden mittels eines Programmes auf einer gesonderten Datenverarbeitungsanlage die Blöcke definiert und/oder die Reihenfolge von Platzierungsregeln erstellt und wird mittels eines weiteren Programmes in einer weiteren Datenverarbeitungsanlage das Verfahren im Übrigen ausgeführt.

Das Verfahren kann von vornherein vorsehen, dass das Programm auf die Sortimentsdaten eines einzigen Handelsunternehmenszugreift. Das Erstellen von Regalbildern eines Handelsunternehmens wird auch als "das Projekt" bezeichnet. Gemäß einer Ausgestaltung liegen dem Verfahren umfassendere Sortimentsdaten zugrunde, die die Sortimentsdaten mehrerer Verkaufsstellen (das Einzelhandelsgeschäft) eines Handelsunternehmens umfassen können. Bei dieser Ausgestaltung bietet das Programm dem Anwender an, interaktiv die Sortimentsdaten einer bestimmten Verkaufsstelle aus einer Sammlung von Sortimentsdaten auszuwählen. Die ausgewählten Sortimentsdaten können in einem Datenspeicher gespeichert werden, auf den das Programm Zugriff hat. Bei dieser Ausgestaltung kann das Verfahren Regalbilder für verschiedene Verkaufsstellen erstellen bzw. Erweiterungen des Sortiments einer Verkaufsstelle einfacher berücksichtigen.

Die Regalbilder können mehreren gleichen Artikeln mehrere Plätze in den vordersten Reihen des Regals (sog. "Facings") zuweisen. Bevorzugt werden besonders bei absatzstarken Artikeln mehrere Stellplätze in den vordersten Reihen des Regals zugeordnet. Gemäß einer Ausgestaltung umfassen die Sortimentsdaten die Angabe, wieviele Exemplare der jeweiligen Artikel in den vordersten Reihen des Regals anzuordnen sind. Diese Anzahl kann beispielsweise anhand der Absatzdaten der verschiedenen Artikel in den verschiedenen Verkaufsstellen festgelegt werden. Gemäß einer weiteren Ausgestaltung bietet das Programm dem Anwender die interaktive Festlegung der Anzahl jedes Artikels in den vordersten Reihen des Regals an. Der Anwender kann dann unter Berücksichtigung der Besonderheiten der Verkaufsstellen, aktueller Trends usw. festlegen, wieviele Exemplare jedes Artikels in den vordersten Reihen angeordnet werden sollen.

Gemäß einer weiteren Ausgestaltung umfassen die Sortimentsdaten für jede Verkaufsstelle das individuelle Sortiment aus verschiedenen Artikeln mit Daten zum Absatz und ermittelt das Programm die Anzahl jedes Artikels in den vordersten Reihen des Regals in Abhängigkeit vom Absatz und den Verkaufszeiten, für die der Regalbestand ausreichen soll, ohne dass das Regal wieder zu befüllen ist. Bei den Verkaufszeiten handelt es sich vorzugsweise um Zeiträume von einem bis mehreren Verkaufstagen. Dabei kann es sich aber auch um Bruchteile von Verkaufstagen bzw. von Öffnungszeiten einer Verkaufsstelle handeln. Die Anzahl der Artikel wird von dem Programm bevorzugt proportional zum Absatz ermittelt. In einem einfachen Fall ist der Zusammenhang zwischen der Anzahl jedes Artikels und dem Absatz linear.

Gemäß einer Ausgestaltung ordnet das Programm die von Anwender definierten Blöcke in Gruppen und stellt diese auf einem Bildschirm dar. Gemäß einer weiteren Ausgestaltung stellt das Programm die verschiedenen Blöcke auf einem Bildschirm in verschiedenen Farben dar. Gemäß einer weiteren Ausgestaltung bietet das Programm dem Anwender die interaktive Zuordnung einer individuellen Farbe zu jedem Block an und stellt die Blöcke auf einem Bildschirm in den vom Anwender gewählten Farben dar.

Für die Erstellung der Platzierungsregeln bietet das Programm dem Anwender gemäß einer Ausgestaltung abgespeicherte Platzierungsregeln und eine interaktive Bearbeitung der hierarchischen Reihenfolge und/oder der Inhalte der Platzierungsregeln an. Gemäß einer weiteren Ausgestaltung bietet das Programm dem Anwender die interaktive Definition eigener Platzierungsregeln an. Das Programm kann dem Anwender die interaktive Bearbeitung abgespeicherter Platzierungsregeln und die interaktive Definition eigener Platzierungsregeln anbieten.

Gemäß einer weiteren Ausgestaltung bietet das Verfahren dem Anwender die interaktive Änderung von Regalbildern an. Dies ermöglicht dem Anwender, die vom Programm durch Anwendung der Platzierungsregeln auf die Blöcke und die Regaldaten erstellten Regalbilder nachzubearbeiten. Beispielsweise kann die Platzierung einzelner Artikel, die in der Gesamtschau des Regalbildes unzweckmäßig erscheint, durch Nacharbeitung geändert werden. Falls das Regalbild Lücken aufweist, können diese bei der Nachbearbeitung aufgefüllt werden. Falls zu viele Artikel für das Regal vorgesehen sind, können bei der Nachbearbeitung Artikel weggelassen werden. Eine derartige Überfüllung eines Regals kann im Regalbild visuell dargestellt werden, indem mehrere Artikel übereinander gelagert abgebildet werden oder in dem Regal nicht unterbringbare Artikel in dem Regalbild seitlich aus dem Regal herausgerückt abgebildet werden.

Die Datenverarbeitungsanlage kann ein einzelner Computer oder ein Computernetzwerk sein.

Die Erfindung wird nachfolgend anhand der anliegenden Darstellungen eines Ausführungsbeispieles näher erläutert. In den Darstellungen zeigen:
- Fig. 1: einen Datenflussplan des erfindungsgemäßen Verfahrens;
- Fig. 2: einen Ausschnitt aus Sortimentsdaten;
- Fig. 3: einen Ausschnitt aus den Platzierungsregeln;
- Fig. 4: einen Ausschnitt aus den Sortimentsdaten geordnet in Blöcken;
- Fig. 5: einen Ausschnitt aus den in einer Reihenfolge angeordneten Platzierungsregeln;
- Fig. 6: einen Ausschnitt aus einer Übersicht von Verkaufsstellen, für die Planogramme erstellt wurden;
- Fig. 7: ein Planogramm vor der Nachbearbeitung;
- Fig. 8: das Planogramm nach der Nachbearbeitung;
- Fig. 9: das Planogramm in einer dreidimensionalen (3D-) Darstellung.

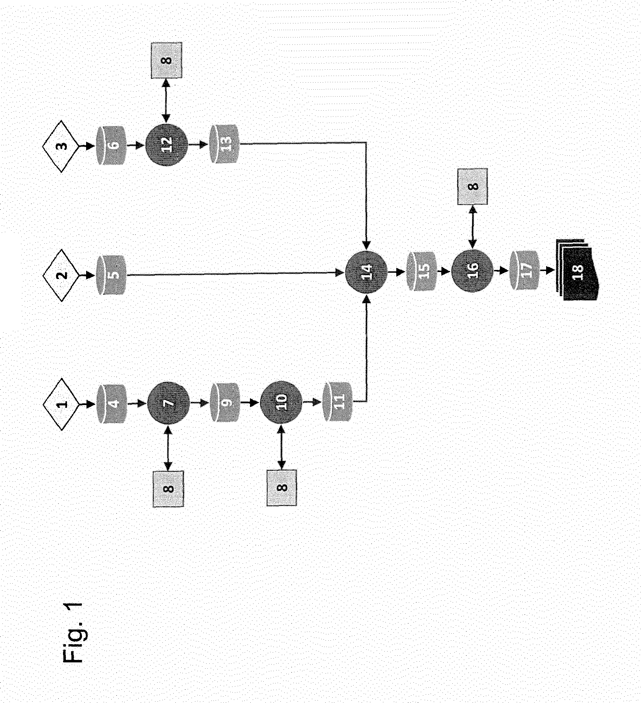

Gemäß Datenflussplan von Fig. 1 werden dem Verfahren über eine Schnittstelle 1 Sortimentsdaten, über eine Schnittstelle 2 Regaldaten und über eine Schnittstelle 3 Platzierungsdaten zugeführt. Diese Daten werden in Datenspeichern 4 für Sortimentsdaten, 5 für Regaldaten und 6 für Platzierungsregeln abgelegt.

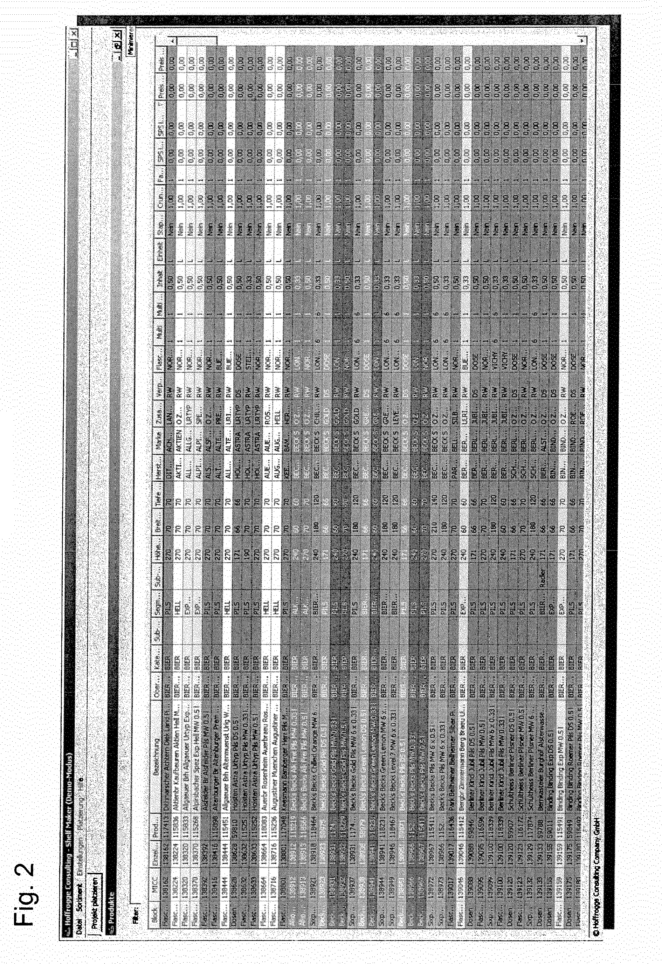

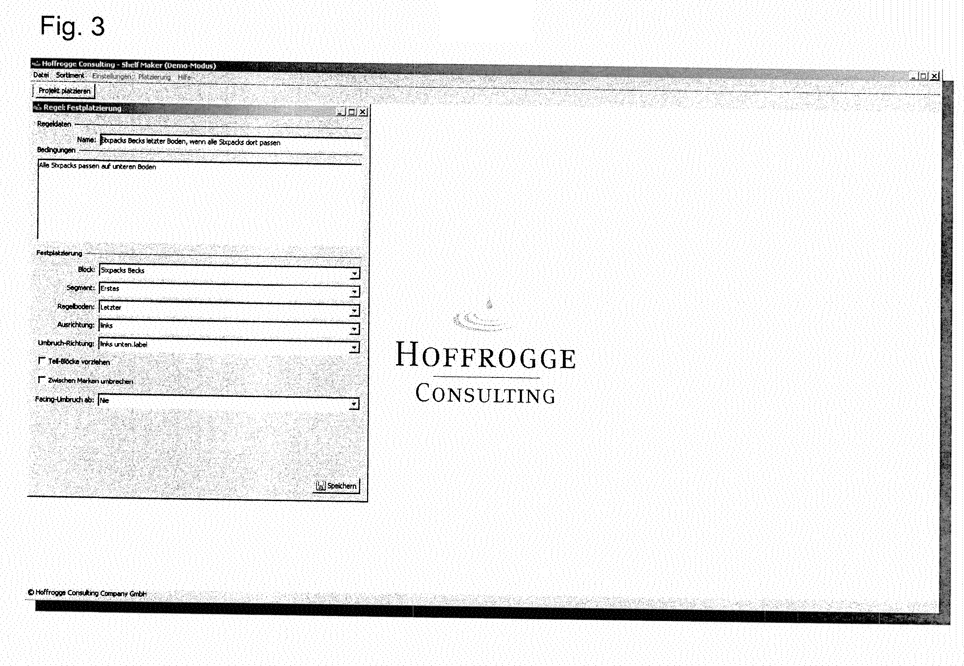

Fig. 2 zeigt einen Ausschnitt aus den Sortimentsdaten und Fig. 3 zeigt einen Ausschnitt aus den Platzierungsregeln.

Die Sortimentsdaten gehen über das Sortiment der Verkaufsstelle hinaus, für das Regalbilder erstellt werden sollen. Durch einen interaktiven Prozess 7 mit einer Schnittstelle 8 zum Anwender werden aus den Sortimentsdaten die Sortimentsdaten der betreffenden Verkaufsstelle selektiert und in einem Datenspeicher 9 abgespeichert.

In einem interaktiven Prozess 10 mit der Schnittstelle 8 zum Anwender werden die Sortimentsdaten des Handelsunternehmens aus dem Datenspeicher 9 zu Blöcken geordnet, die im Datenspeicher 11 abgespeichert werden. Die Blöcke umfassen einen oder mehrere Artikel mit einem gemeinsamen Attribut oder einer gemeinsamen Kombination von Attributen.

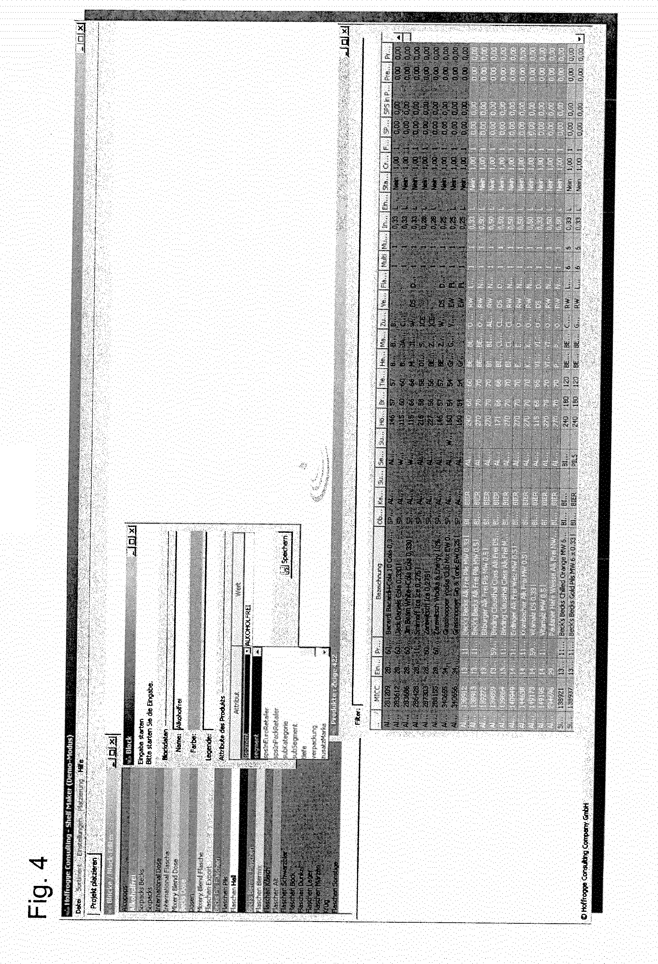

Fig. 4 zeigt einen Ausschnitt aus den zu Blöcken geordneten Sortimentsdaten.

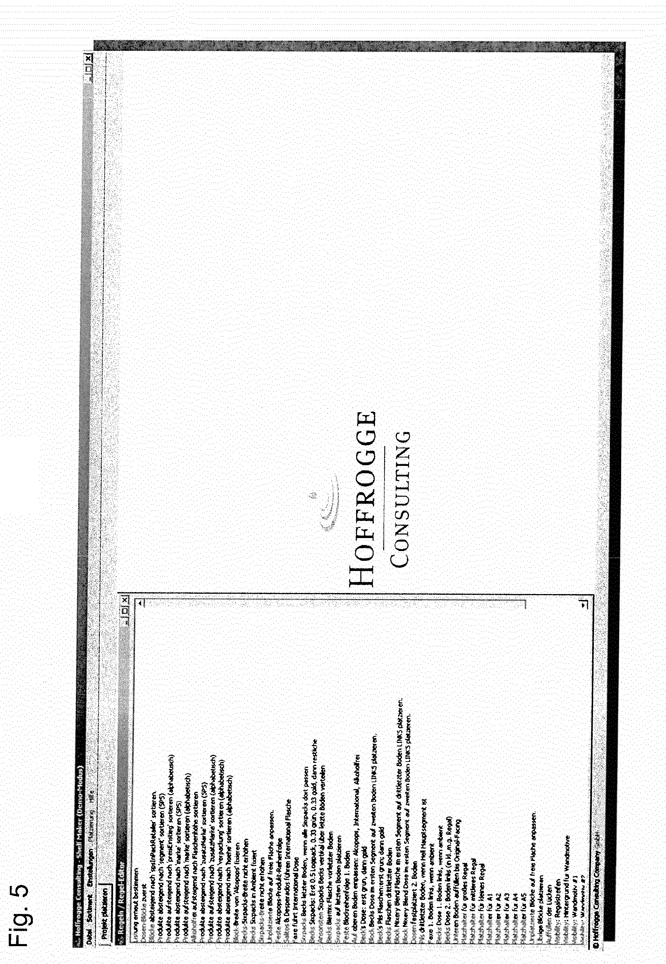

Die Platzierungsregeln aus dem Datenspeicher 6 werden in einem interaktiven Prozess 12 über die Schnittstelle 8 vom Anwender in eine bestimmte Reihenfolge gebracht. Dabei hat der Anwender die Möglichkeit, die Platzierungsregeln zu ändern oder eigene Platzierungsregeln zu definieren und die geänderten bzw. selbst definierten Platzierungsregeln in der Reihenfolge zu berücksichtigen. Die vom Anwender erstellte bzw. definierte Reihenfolge der Platzierungsregeln wird in einem Datenspeicher 13 gespeichert. Ein Ausschnitt aus den in eine bestimmte Reihenfolge gebrachten Platzierungsregeln ist in Fig. 5 gezeigt.

Die Blöcke aus dem Datenspeicher 11, die Regaldaten aus dem Datenspeicher 5 und die in eine bestimmte Reihenfolge gebrachten Platzierungsregeln aus dem Datenspeicher 13 werden in einem automatischen Rechenprozess 14 zu Regalbildern verarbeitet. Hierfür zieht der Rechenprozess 15 der Reihe nach jede Platzierungsregel heran und wendet diese auf die Blöcke und die Regaldaten eines bestimmten Regals einer Verkaufsstelle an. Auf diese Weise wird das betreffende Regal individuell mit Artikeln befüllt.

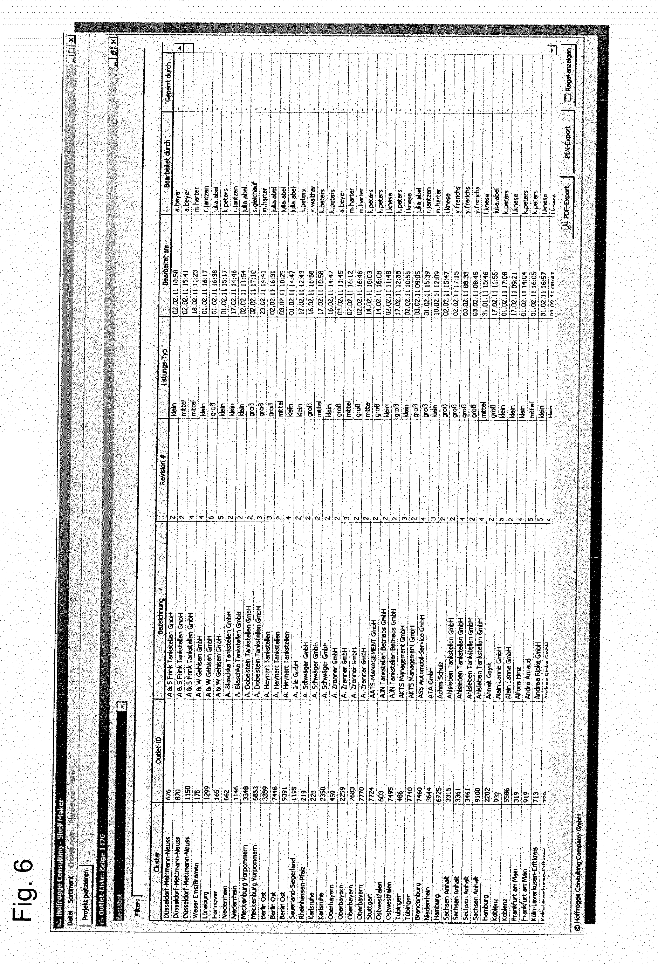

Der Prozess wird für sämtliche Verkaufsstellen des Handelsunternehmens durchgeführt. Ggfs. wird er für mehrere Regale jeder Verkaufsstelle durchgeführt. Die ermittelten Regalbilder werden im Datenspeicher 15 gespeichert. Ein Ausschnitt aus einer Übersicht von Verkaufsstellen, für die Regalbilder erstellt wurden, ist in Fig. 6 abgebildet.

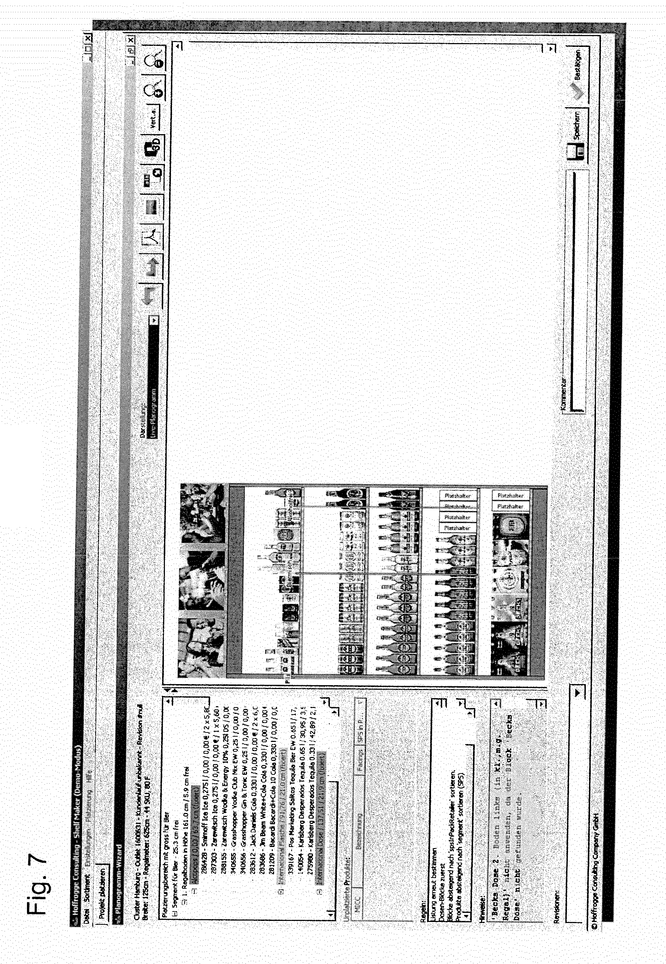

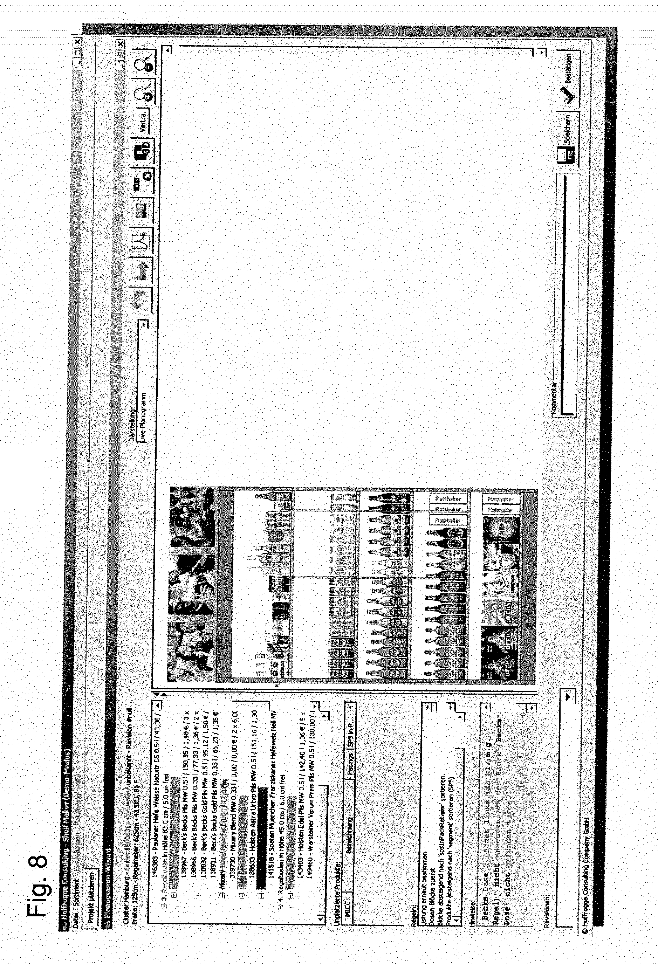

Die Regalbilder aus dem Datenspeicher 15 werden ggfs. in einem interaktiven Prozess 16 mit einer Schnittstelle 8 zum Anwender nachbearbeitet. Fig. 7 zeigt ein erstelltes Regalbild vor und Fig. 8 das Regalbild nach der Nachbearbeitung. Die nachbearbeiteten Regalbilder werden in einem Datenspeicher 17 abgespeichert und von einer Ausgabeeinrichtung 18 ausgegeben.

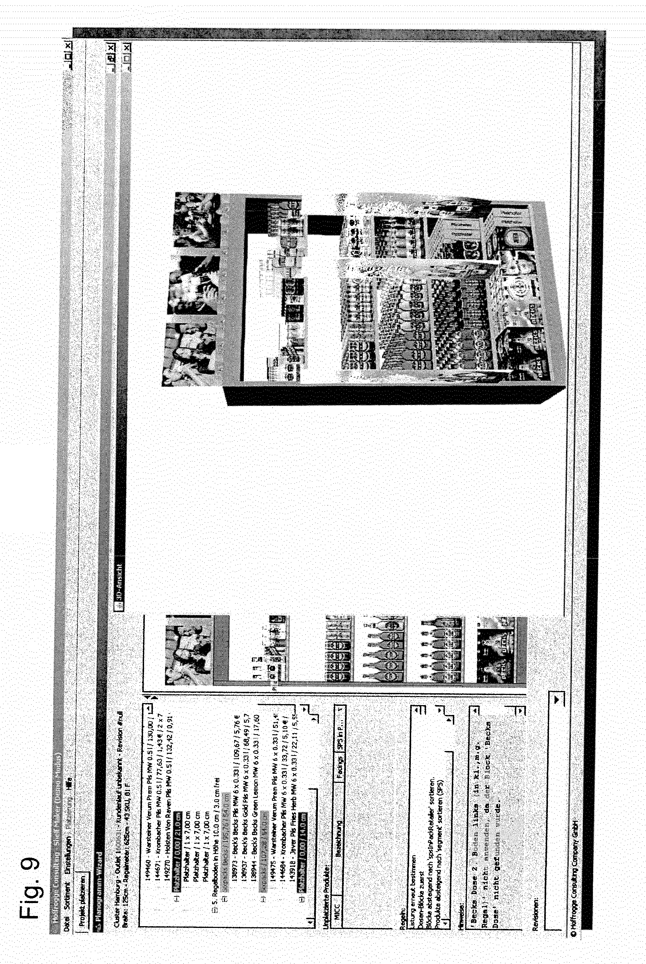

Fig. 9 zeigt eine 3D-Darstellung des Regalbildes, die ebenfalls durch das Programm erzeugt werden kann.

## Patentansprüche

1. Verfahren zum Betreiben mindestens einer Datenverarbeitungsanlage gemäß mindestens einem Programm zum Erstellen von individuellen Regalbildern für eine Vielzahl verschiedener Verkaufsstellen eines Handelsunternehmens, bei dem
• das Programm auf Sortimentsdaten zugreift, die für jede Verkaufsstelle ein individuelles Sortiment aus verschiedenen Artikeln mit zugehörigen Attributen definieren,
• das Programm einem Anwender anbietet, interaktiv über Ein- und Ausgabegeräte verschiedene Blöcke zu definieren, die jeweils Artikel mit einem Attribut umfassen, das für den jeweiligen Block spezifisch ist,
• das Programm nach erfolgter Definition von Blöcken durch den Anwender auf die Blöcke in einem Datenspeicher zugreift,
• das Programm auf Regaldaten mit den individuellen Daten mindestens eines Regals jeder Verkaufsstelle in einem Datenspeicher zugreift,
• das Programm dem Anwender anbietet, interaktiv eine sequentielle Reihenfolge von Platzierungsregeln zu erstellen, die die Platzierung verschiedener Blöcke in Regalen betreffen und vorgeben, nach welchen Regeln die verschiedenen Blöcke in den Regalen zu platzieren sind,
• das Programm nach erfolgter Eingabe auf die sequentielle Reihenfolge von Platzierungsregeln in einem Datenspeicher zugreift und
• das Programm für jede Verkaufsstelle nacheinander die gespeicherten Platzierungsregeln entsprechend ihrer Reihenfolge auf die gespeicherten Blöcke mit den Artikeln aus dem Sortiment der Verkaufsstelle anwendet und unter Berücksichtigung der Regaldaten die Stellplätze der verschiedenen Artikel in dem Regal der Verkaufsstelle ermittelt und
• das Programm die Stellplätze der verschiedenen Artikel in einem Regalbild darstellt.

2. Verfahren nach Anspruch 1, bei dem das Programm dem Anwender anbietet, interaktiv die Sortimentsdaten eines bestimmten Handelsunternehmens aus einer umfangreicheren Sammlung von Sortimentsdaten auszuwählen.

3. Verfahren nach Anspruch 1 oder 2, bei dem das Programm dem Anwender die interaktive Festlegung der Anzahl jedes Artikels in den vordersten Reihen des Regals anbietet.

4. Verfahren nach einem der Ansprüche 1 bis 3, bei dem die Sortimentsdaten für jede Verkaufsstelle das individuelle Sortiment aus verschiedenen Artikeln mit Daten zum Absatz umfassen und das Programm die Anzahl jedes Artikels in den vordersten Reihen des Regals in Abhängigkeit vom Absatz und den Verkaufszeiten, für die der Regalbestand ausreichen soll, ohne dass das Regal wieder zu befüllen ist, ermittelt.

5. Verfahren nach einem der Ansprüche 1 bis 4, bei dem das Programm dem Anwender die interaktive Definition von Blöcken aus Artikeln mit gemeinsamen Attributen anbietet, wobei die gemeinsamen Attribute ausgewählt sind aus der Art, dem Hersteller, der Marke, der Menge, der geographischen Herkunft, der Farbe, der Größe, dem Verpackungstyp und anderen Eigenschaften des Artikels.

6. Verfahren nach einem der Ansprüche 1 bis 5, bei dem das Programm verschiedene Blöcke auf einem Bildschirm in verschiedenen Farben darstellt.

7. Verfahren nach einem der Ansprüche 1 bis 6, bei dem das Programm dem Anwender die interaktive Zuordnung einer individuellen Farbe zu jedem Block anbietet und die Blöcke auf einem Bildschirm in den vom Anwender gewählten Farben darstellt.

8. Verfahren nach einem der Ansprüche 1 bis 7, bei dem eine oder mehrere Platzierungsregeln ausgewählt sind aus Regeln, die die Platzierung in einem Regal mit standardisierten Abmessungen, von bestimmten Blöcken auf einem bestimmten Regalboden, auf einer bestimmten Position eines Regalbodens, in einem bestimmten Regalsegment, in einer bestimmten Richtung in einer vorgegebenen Reihenfolge, in alphabetischer Reihenfolge, in einer durch mindestens eine Abmessung und/oder das Gewicht und/oder die Menge und/oder den Preis bestimmten Reihenfolge, in einer für verschiedene Arten von Artikeln vorgegebenen Reihenfolge, in einer für Gruppen verschiedener Artikel vorgegebenen Reihenfolge, die Einhaltung von bestimmten Freiräumen und/oder Platzhaltern an bestimmten Positionen des Regals, das Auffüllen von leeren Plätzen und die Platzierung eines neu in das Sortiment aufgenommenen Artikels vorgeben.

9. Verfahren nach einem der Ansprüche 1 bis 8, bei dem das Programm dem Anwender abgespeicherte Platzierungsregeln und eine interaktive Bearbeitung der hierarchischen Reihenfolge und/oder Inhalte der Platzierungsregeln anbietet.

10. Verfahren nach einem der Ansprüche 1 bis 9, bei dem Platzierungsregeln die Abfolge verschiedener Artikel in den Blöcken betreffen.

11. Verfahren nach einem der Ansprüche 1 bis 10, bei dem das Programm dem Anwender die interaktive Definition eigener Platzierungsregeln anbietet.

12. Verfahren nach einem der Ansprüche 1 bis 11, bei dem das Programm dem Anwender die interaktive Änderung von Regalbildern anbietet.

## Claims

1. A method for operating at least one data processing unit according to at least one program for producing individual shelving unit images for a plurality of different sales outlets of a commercial enterprise, wherein
• the program accesses range data that define an individual range of different articles with associated attributes for each sales outlet,
• the program offers a user the opportunity to interactively define different blocks by means of input and output devices, said blocks each comprising articles with an attribute that is specific to the relevant block,
• after the definition of the blocks is completed by the user, the program accesses the blocks in a data memory,
• the program accesses shelving unit data with the individual data of at least one shelving unit of each sales outlet in a data memory,
• the program offers the user the opportunity to interactively produce a sequential series of positioning rules that relate to the positioning of different blocks in shelving units and specify the rules according to which the different blocks are to be positioned in the shelving units,
• after the input is completed, the program accesses the sequential series of positioning rules in a data memory, and
• for each sales outlet, the program successively applies the stored positioning rules according to the order thereof to the stored blocks with the articles from the range of the sales outlet and, taking the shelving unit data into account, determines the placing positions of the different articles in the shelving unit of the sales outlet, and
• the program displays the placing positions of the different articles in a shelving unit image.

2. The method according to claim 1, wherein the program offers the user the opportunity to interactively select the range data of a particular commercial enterprise from a more comprehensive collection of range data.

3. The method according to claim 1 or 2, wherein the program offers the user the opportunity to interactively set the quantity of each article in the front rows of the shelving unit.

4. The method according to any one of claims 1 to 3, wherein the range data for each sales outlet cover the individual range of different articles with data relating to the sales volume and the program determines the quantity of each article in the front rows of the shelving unit depending on the sales volume and the sale periods for which the shelving unit stock should suffice without the shelving unit having to be restocked.

5. The method according to any one of claims 1 to 4, wherein the program offers the user the opportunity to interactively define blocks of articles with common attributes, wherein the common attributes are selected from among the type, manufacturer, brand, amount, geographical origin, color, size, packaging type and other properties of the article.

6. The method according to any one of claims 1 to 5, wherein the program displays different blocks on a screen in different colors.

7. The method according to any one of claims 1 to 6, wherein the program offers the user the opportunity to interactively assign an individual color to each block and displays the blocks on a screen in the colors chosen by the user.

8. The method according to any one of claims 1 to 7, wherein one or more positioning rules are selected from rules that specify the positioning in a shelving unit with standard dimensions, of particular blocks on a particular shelf, at a particular position on a shelf, in a particular shelving unit segment, in a particular direction in a predefined order, in alphabetical order, in an order determined by at least one dimension and/or the weight and/or the amount and/or the price, in an order predefined for different types of articles, in an order predefined for groups of different articles, that specify adherence to particular clearances and/or placeholders at particular positions in the shelving unit, that specify the restocking of empty spaces, and that specify the positioning of an article newly incorporated into the range.

9. The method according to any one of claims 1 to 8, wherein the program offers the user saved positioning rules and the opportunity to interactively change the hierarchical order and/or contents of the positioning rules.

10. The method according to any one of claims 1 to 9, wherein positioning rules relate to the sequence of different articles in the blocks.

11. The method according to any one of claims 1 to 10, wherein the program offers the user the opportunity to interactively define their own positioning rules.

12. The method according to any one of claims 1 to 11, wherein the program offers the user the opportunity to interactively edit shelving unit images.

## Revendications

1. Procédé d'exploitation d'au moins une installation de traitement de données d'après au moins un programme de création d'images d'étagères individuelles pour de multiples points de vente différents d'une entreprise commerciale, lors duquel
• le programme accède aux données de l'assortiment, qui définissent un assortiment individualisé pour chaque point de vente à partir de divers articles avec les attributs associés,
• le programme propose à un utilisateur de définir interactivement différents blocs via des périphériques d'entrée et de sortie, qui comprennent respectivement des articles avec un attribut, qui est spécifique du bloc respectif,
• le programme accède aux blocs dans une mémoire de données une fois les blocs définis par l'utilisateur,
• le programme accède aux données d'étagères avec les données individuelles d'au moins une étagère de chaque point de vente dans une mémoire de données,
• le programme propose à l'utilisateur d'établir interactivement un ordre séquentiel de règles de placement, qui concernent le placement de différents blocs dans les étagères et prédéfinissent d'après quelles règles les différents blocs doivent être placés dans les étagères,
• le programme accède à l'ordre séquentiel des règles de placement dans une mémoire de données une fois la saisie effectuée et
• le programme applique successivement pour chaque point de vente les règles de placement enregistrées selon leur ordre aux blocs enregistrés avec les articles issus de l'assortiment du point de vente et détermine les emplacements des différents articles dans l'étagère du point de vente en tenant compte des données d'étagères et
• le programme représente les emplacements des divers articles sur une image d'étagère.

2. Procédé selon la revendication 1, lors duquel le programme propose à l'utilisateur de sélectionner interactivement les données d'assortiment d'une certaine entreprise commerciale à partir d'un recueil plus vaste de données d'assortiment.

3. Procédé selon la revendication 1 ou 2, lors duquel le programme propose à l'utilisateur de fixer interactivement le nombre de chaque article dans les toutes premières rangées de l'étagère.

4. Procédé selon l'une des revendications 1 à 3, lors duquel les données d'assortiment comprennent pour chaque point de vente l'assortiment individuel constitués de divers articles avec des données relatives aux ventes et le programme détermine le nombre de chaque article dans les toutes premières rangées de l'étagère en fonction des ventes et des horaires de vente durant lesquels le contenu de l'étagère doit suffire sans que l'étagère doive être de nouveau remplie.

5. Procédé selon l'une des revendications 1 à 4, lors duquel le programme propose à l'utilisateur de définir interactivement des blocs constitués d'articles avec des attributs communs, dans lequel les attributs communs sont sélectionnés parmi le genre, le fabricant, la marque, la quantité, l'origine géographique, la couleur, la taille, le type d'emballage et d'autres propriétés de l'article.

6. Procédé selon l'une des revendications 1 à 5, lors duquel le programme représente différents blocs sur un écran de visualisation dans diverses couleurs.

7. Procédé selon l'une des revendications 1 à 6, lors duquel le programme propose à l'utilisateur d'assigner interactivement une couleur individuelle à chaque bloc et représente les blocs sur un écran de visualisation dans les couleurs choisies par l'utilisateur.

8. Procédé selon l'une des revendications 1 à 7, lors duquel une ou plusieurs règles de placement sont sélectionnées parmi des règles qui prédéfinissent le placement dans une étagère aux dimensions normalisées, de certains blocs sur une certaine tablette d'étagère, à un certain endroit d'une tablette d'étagère, dans un certain segment d'étagère, dans une certaine direction dans un ordre prédéfini, en ordre alphabétique, dans un ordre fixé par au moins une dimension et/ou le poids et/ou la quantité et/ou le prix, dans un ordre prédéfini par différents genres d'articles, dans un ordre prédéfini pour des groupes d'articles différents, le respect de certains espaces libres et/ou écarteurs à certains endroits de l'étagère, le remplissage des emplacements vides et le placement d'un article nouvellement intégré dans l'assortiment.

9. Procédé selon l'une des revendications 1 à 8, lors duquel le programme propose à l'utilisateur des règles de placement sauvegardées et un traitement interactif de l'ordre hiérarchique et/ou des contenus des règles de placement.

10. Procédé selon l'une des revendications 1 à 9, lors duquel les règles de placement concernent la succession des différents articles dans les blocs.

11. Procédé selon l'une des revendications 1 à 10, lors duquel le programme propose à l'utilisateur de définir interactivement de propres règles de placement.

12. Procédé selon l'une des revendications 1 à 11, lors duquel le programme propose à l'utilisateur de modifier interactivement les images d'étagères.
